# FASCICULE DE BREVET EUROPEEN

(11) **EP 0 528 727 B1**
(45) Date de publication et mention de la délivrance du brevet: **18.10.1995**
(21) Numéro de dépôt: 92402287.4
(22) Date de dépôt: 13.08.1992
(51) Int. Cl.: F16L 55/00, B65G 53/56, B67D 5/60

(54) **Installation de connexion sélective temporaire à entrées et sorties multiples**
Anordnung für das temporäre, selektive Verbinden von mehreren Ein- und Ausgangsrohröffnungen
Assembly for temporarily and selectively connecting multiple pipe inlets and outlets

(30) Priorité: 21.08.1991 FR 9110492
(43) Date de publication de la demande: 24.02.1993
(73) Titulaire: FMC EUROPE S.A., F-89103 Sens Cédex (FR)
(72) Inventeur: Le Devehat, Eugène, F-89100 Saligny (FR)
(74) Mandataire: Rinuy, Santarelli

(56) Documents cités:
- GB-A- 1 566 599
- US-A- 3 744 376
- US-A- 4 790 568

## Description

L'invention concerne une installation de connexion sélective de l'une quelconque d'une pluralité de canalisations d'entrée à l'une quelconque d'une pluralité de canalisations de sortie. Elle vise notamment, mais non exclusivement, la circulation de produits pétroliers.

Le besoin se fait couramment sentir dans les installations de distribution de fluide à lignes multiples, de pouvoir connecter l'une quelconque de plusieurs lignes d'entrée à l'une quelconque de plusieurs lignes de sortie, les nombres de lignes d'entrée et de sortie pouvant être importants, par exemple de l'ordre d'une quinzaine, voire plus.

On a déjà envisagé à cet effet (voir par exemple US-A-4 790 568) de disposer dans des plans parallèles, les lignes d'entrée, d'une part, et les lignes de sortie, d'autre part, selon deux directions perpendiculaires de ces plans et de munir l'extrémité de chaque ligne d'un embout télescopique adapté à s'allonger parallèlement à ces plans, jusqu'au contact avec l'embout télescopique de l'une quelconque des lignes de l'autre catégorie. Mais cela présente divers inconvénients.

Tout d'abord, la mise en oeuvre de tels embouts télescopiques pose des problèmes d'étanchéité, de guidage et de tenue mécanique qui limite en pratique l'application de cette solution à des petits nombres de lignes d'entrée et de sortie.

A titre subsidiaire, cette solution se prête mal à une automatisation.

En outre et surtout, la mise en oeuvre de tronçons télescopiques implique nécessairement une variation de diamètre intérieur, ce qui dégrade localement de façon sensible l'efficacité d'un raclage visant à éliminer des parois d'une ligne d'entrée et d'une ligne de sortie temporaisement connectées pour la distribution d'un liquide, des traces de celui-ci susceptibles de polluer un autre liquide que l'on ferait ensuite circuler dans l'une ou l'autre de ces lignes.

Le besoin s'est fait sentir d'une "station d'aiguillage de liquides" formée de canalisations qui soient toutes raclables, qui se prête à la connexion éventuellement simultanée d'un grand nombre de lignes d'entrée à un grand nombre de lignes de sortie, selon toutes les combinaisons possibles et ce, de manière automatisable.

La Demanderesse a déjà proposé, dans sa demande FR-A-2 659 418 (publiée 13.09.91), une installation de connexion sélective temporaire comportant deux jeux de liaisons articulées connectés respectivement à un jeu de tronçons fixes d'entrée de fluide et à un jeu de tronçons fixes de sortie de fluide. Les liaisons articulées de chaque jeu sont terminées chacune par un tronçon d'accouplement adapté à longer un plan fictif d'affrontement en sorte de venir s'accoupler au tronçon d'accouplement de n'importe quelle liaison articulée de l'autre jeu ; le plan d'affrontement est perpendiculaire aux tronçons fixes et les tronçons d'accouplement longent ce plan parallèlement à l'une ou l'autre de deux directions de ce plan, selon qu'ils appartiennent aux liaisons articulées de l'un ou l'autre des jeux de liaisons.

Ce système de liaisons articulées répond parfaitement au besoin indiqué, c'est-à-dire raccordement automatisable, et diamètre intérieur constant permettant un raclage efficace.

Cependant, lorsque le nombre de lignes d'entrées et de sorties devient très important, l'encombrement de l'ensemble pose des problèmes d'implantation, particulièrement dans les unités existantes où l'espace disponible est très réduit.

L'invention a pour objet de pallier cet inconvénient, c'est-à-dire de réduire de façon très importante l'encombrement de l'installation tout en conservant les avantages de fonctionnement automatique et de diamètre constant permettant un raclage parfait.

L'invention a aussi pour objet de minimiser (en fait réduire à deux) le nombre de coudes qu'introduit l'installation entre les lignes d'entrée et de sortie de fluide, et donc d'éviter au racleur de trop nombreux changements de direction lorsqu'il traverse l'installation.

L'invention propose à cet effet une installation de connexion sélective temporaire à entrées et sorties de fluides multiples, comportant :
. un cadre ayant globalement la forme d'un parallélogramme et comportant de premier et troisième côtés parallèles à une première direction et de second et quatrième côtés parallèles à une seconde direction,
. une première série de n lignes tubulaires parallèles équidistantes coplanaires s'étendant entre les premier et troisième côtés parallèlement à la seconde direction et une seconde série de m lignes tubulaires parallèles équidistantes coplanaires s'étendant entre les second et quatrième côtés parallèlement à la première direction, ces première et seconde séries de lignes tubulaires, étant de même diamètre intérieur et situés dans des plans parallèles décalés d'une distance donnée parallèlement à une troisième direction transversale aux première et seconde directions,
. chaque ligne tubulaire comportant un attelage de tronçons tubulaires modulaires identiques, en nombre au moins égal à m-1 pour les lignes de la première série et en nombre au moins égal à n-1 pour les lignes de la seconde série, et chaque tronçon modulaire d'une ligne d'une série étant en regard, selon la troisième direction, d'une ligne de l'autre série, cet attelage étant raccordé en une extrémité, à un tronçon extrême tubulaire fixe destiné à être raccordé à une entrée ou une sortie de fluide, et, en l'autre extrémité, à un tronçon extrême borgne lui-même fixé à un organe de commande en translation, les tronçons tubulaires extrêmes fixes des lignes des première et seconde séries étant respectivement fixés aux premier et second côtés, et les organes de commande en translation des lignes des première et seconde séries étant respectivement fixés aux troisième et quatrième côtés les tronçons tubulaires modulaires étant attelés entre eux et aux tronçons extrêmes par des moyens d'accrochage admettant une position de libération, grâce à quoi l'attelage entre les tronçons modulaires ou extrêmes d'une ligne peut être supprimé temporairement entre deux quelconques de ces tronçons,
. les tronçons modulaires des lignes de chaque série ayant une longueur égale à l'écartement entre les lignes de l'autre série,
. des éléments d'étanchéité étant prévus à chaque interface entre tronçons modulaires ou extrêmes,
. les tronçons modulaires et le tronçon extrême borgne de chaque ligne étant individuellement montés coulissants sur des rails de guidage parallèles à cette ligne, grâce à quoi, lorsque l'attelage entre deux quelconques des tronçons d'une ligne est supprimé temporairement, la commande en translation du tronçon extrême borgne de la ligne par son organe de commande en translation, à l'opposé du tronçon extrême fixe de cette ligne, dégage un espace dans la ligne entre lesdits tronçons quelconques,
. un élément libre de raccordement étant adapté à venir occuper deux tels espaces ménagés, en regard suivant la troisième direction, dans deux lignes tubulaires appartenant respectivement à chacune des séries, cet élément comportant un tronçon central destiné à s'aligner au moins approximativement selon la troisième direction et deux tronçons transversaux décalés le long de ce tronçon central d'une distance égale à l'écartement entre les séries de lignes, et destinés à s'aligner respectivement suivant les première et seconde directions, à l'intérieur de cet élément étant ménagés deux coudes tubulaires de même diamètre interne que les lignes, raccordés l'un à l'autre dans le tronçon central, et destinés à être raccordés simultanément auxdites deux lignes, en direction des tronçons extrêmes fixes de ces lignes, ces tronçons transversaux étant rendus solidaires temporairement de ces lignes par commande en translation des tronçons extrêmes borgnes de ces lignes vers les tronçons extrêmes fixes de ces lignes.

Selon des dispositions préférées de l'invention, éventuellement combinées :
- elle comporte un manipulateur muni d'une pince de préhension mobile parallèlement aux trois directions, destiné à la commande en mouvement de l'élément de raccordement, et adapté à déplacer cet élément de raccordement sans changement d'orientation,
- ce manipulateur comporte une poutre parallèle aux lignes d'une série, mobile par rapport au cadre parallèlement aux lignes de l'autre série, un chariot mobile le long de cette poutre et portant un bras télescopique parallèle à la troisième direction, terminé par la pince de préhension,
- les nombres entiers n et m étant différents, le manipulateur est situé en regard de la série comportant le plus grand nombre de lignes,
- à l'interface entre deux tronçons quelconques, les moyens d'accrochage sont formés d'un crochet pivotant porté par l'un des tronçons, adapté à coiffer un rebord ménagé sur l'autre des tronçons, et muni d'un levier de manoeuvre destiné à permettre, par appui de l'élément de manoeuvre sur ce levier, à amener ce crochet en position de libération, à l'encontre d'un organe de rappel élastique,
- l'élément de raccordement comporte une portée d'appui destinée à agir sur ce levier de manoeuvre,
- elle comporte une pluralité d'éléments de raccordement, de nombre égal au plus petit des nombres entiers n et m,
- elle comporte, pour ces éléments de raccordement, des emplacements de stockage situés au moins approximativement en regard, selon la troisième direction, des tronçons extrêmes fixes de la série ayant un nombre de lignes égal à ce nombre d'éléments de raccordement, dans le plan de l'autre série de lignes,
- les tronçons extrêmes fixes ont, en direction des lignes, un embout rétractable sur une course très inférieure à la longueur d'un tronçon modulaire, destiné à permettre par rétraction l'apparition d'un jeu pour la mise en place, parallèlement à la troisième direction, de l'élément de raccordement dans les espaces ménagés en regard dans les deux séries de lignes, et à participer par suppression de cette rétraction, au maintien en place de cet élément dans l'installation,
- la course de rétraction vaut entre 10 et 15 % de la longueur des tronçons modulaires,
- chaque tronçon modulaire comporte un embout mâle et un embout femelle tous deux munis de joints d'étanchéité,
- l'écartement entre les plans des séries de lignes vaut au moins trois fois le diamètre interne des lignes,
- les première, seconde et troisième directions sont perpendiculaires entre elles,
- les séries de lignes sont dans des plans verticaux,
- l'organe de commande en translation est un vérin,
- les nombres entiers n et m sont compris entre 5 et 30.

On appréciera qu'une installation conforme à l'invention a schématiquement une structure en double "boulier", les "boules" étant des tronçons tubulaires modulaires mobiles selon une direction qui est différente pour chaque "boulier", et les éléments tubulaires de connexion étant mis en place à la faveur de deux espaces ménagés en regard dans chacun des "bouliers" et des moyens d'étanchéité simples étant suffisants pour assurer l'étanchéité requise entre "boules" successives.

On appréciera qu'une telle installation peut être évolutive, dès lors que le cadre est évolutif (modulaire) : il est alors facile de rajouter une ligne dans une série, et un tronçon modulaire dans chacune des lignes de l'autre série.

Des objets, caractéristiques et avantages de l'invention ressortent de la description qui suit, donnée à titre d'exemple illustratif non limitatif, en regard des dessins annexés sur lesquels :
- la figure 1 est une vue en élévation, avec arrachements partiels et sans son manipulateur d'une installation conforme à l'invention, à sept entrées et quatre sorties de fluides, disposée verticalement,
- la figure 2 en est une vue en coupe horizontale selon la ligne II-II de la figure 1,
- la figure 3 en est une vue en coupe verticale, selon la ligne III-III de la figure 1,
- la figure 4 est une vue partielle, analogue à celle de la figure 2, représentant un élément de raccordement en train d'être mis en place par le manipulateur,
- la figure 5, est une vue de détail montrant l'interface entre deux tronçons attelés l'un à l'autre mais sur le point d'être libérés, et
- la figure 6 est un schéma synoptique des circuits de détection, de commande et d'alimentation de l'installation telle que représentée à la figure 2.

Les figures représentent une installation de connexion sélective temporaire multiple adaptée à assurer la connexion de l'une quelconque de plusieurs lignes d'entrée E1, ... E7 à l'une quelconque de plusieurs lignes de sortie S1, ... S4 en évitant toute possibilité de "pollution" réciproque entre les produits véhiculés par les diverses lignes connectées par l'installation, notamment en cas de fuites accidentelles.

Cette installation permet l'utilisation simultanée de la totalité des lignes raccordées lorsqu'il y a autant de lignes d'entrée que de lignes de sortie ; il va de soi que, comme c'est le cas ici, lorsque le nombre n (ici égal à 7) de lignes d'entrée est différent du nombre m (ici égal à 4) des lignes de sortie, le nombre maximum de lignes pouvant être raccordées simultanément est égal au plus petit des nombres n et m.

Cette installation comprend principalement un cadre 1, ici muni de pieds et disposé verticalement en sorte de former un portique. Ce cadre a globalement la forme d'un parallélogramme (ici un rectangle) avec un côté supérieur 11 destiné au raccordement aux entrées de fluides, un côté vertical droit 12 destiné au raccordement à des sorties de fluide, un côté inférieur 13 et un côté vertical gauche 14.

Les premier et second côtés 11 et 12 sont munis de brides de raccordement 15.

On détermine une première direction X-X comme étant la direction horizontale suivant laquelle s'étendent les premier et troisième côtés 11 et 13, et une seconde direction Y-Y comme étant la direction verticale suivant laquelle s'étendent les second et quatrième côtés 12 et 14.

A l'intérieur de ce cadre sont disposées une première série de sept lignes tubulaires 20 (autant que d'entrées de fluide ), parallèles équidistantes et coplanaires, s'étendant parallèlement à la direction Y-Y, ainsi qu'une seconde série de quatre lignes tubulaires 30 (autant que de sorties de fluide), parallèles, équidistantes et coplanaires, s'étendant parallèlement à la Direction X-X.

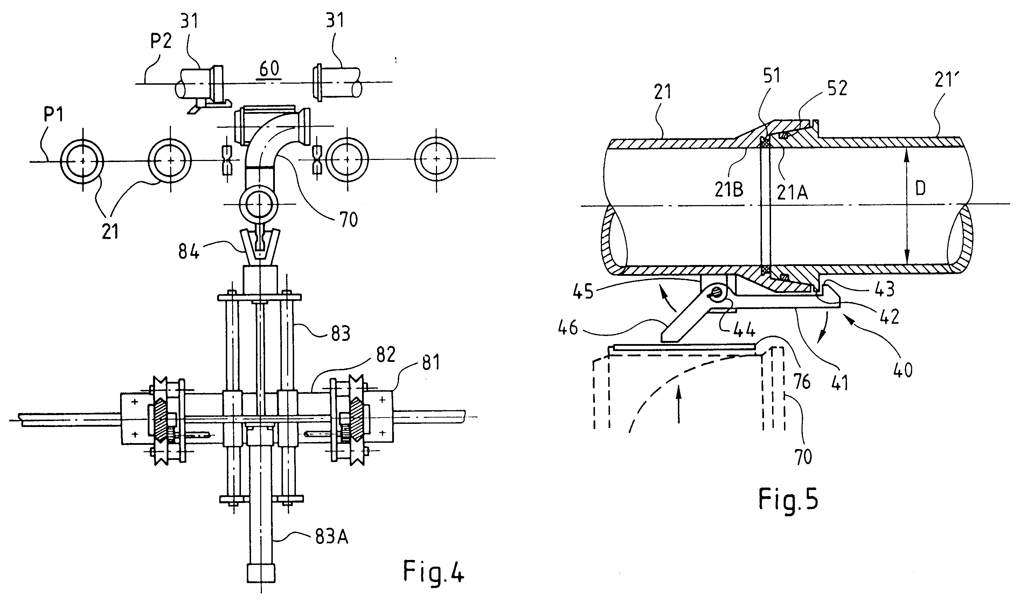

Ces lignes 20 et 30 sont de même diamètre interne D (voir la figure 5).

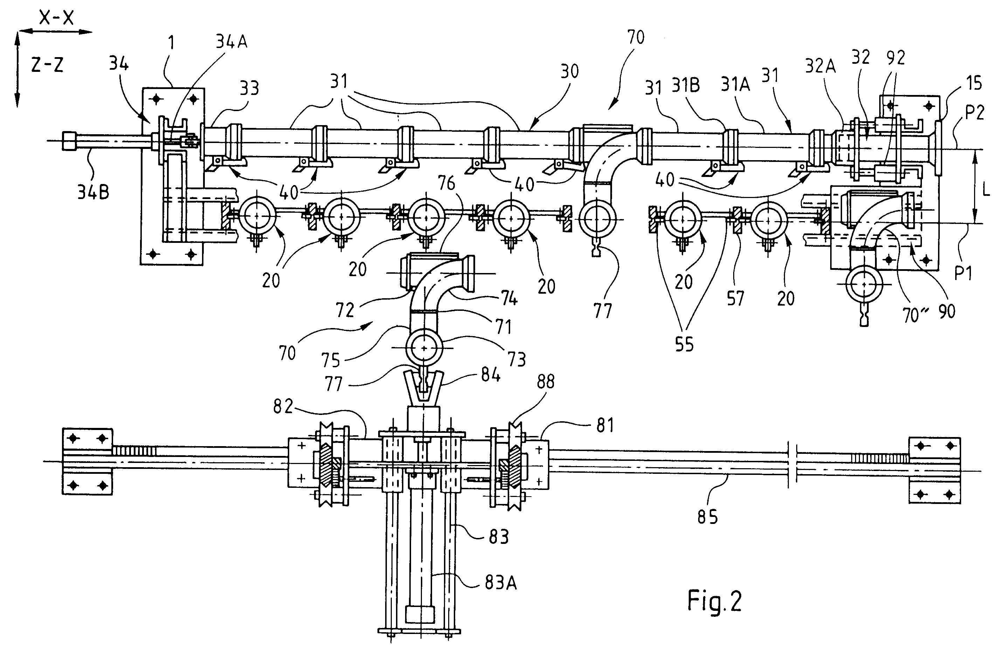

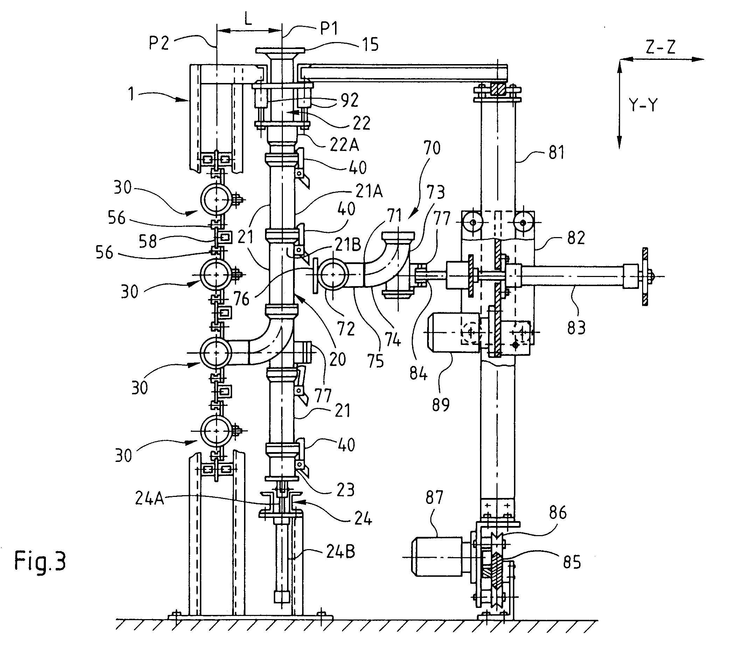

Ces lignes (plus exactement leurs axes) sont situées dans deux plans P1 et P2 décalés d'une distance prédéterminée L suivant une troisième dimension Z-Z (horizontale) ici perpendiculaire aux directions X-X et Y-Y (voir les figures 2 et 3).

Chaque ligne tubulaire 20 (ou 30) comporte un attelage de tronçons tubulaires modulaires identiques 21 (ou 31), en nombre égal (voir supérieur) à 3 (ou 6), c'est-à-dire au nombre de lignes dans l'autre série moins 1 ; chaque tronçon 21 (ou 31) est en regard d'une ligne 30 (ou 20) de l'autre série. Les tronçons 21 (ou 31) ont une longueur égale à l'écartement des lignes dans l'autre série.

Chaque attelage est raccordé, en une extrémité, par un tronçon extrême tubulaire fixe 22 (ou 32) solidaire d'une des brides de raccordement 15 et, en l'autre extrémité, à un tronçon extrême borgne 23 (ou 33) lui-même fixé à un organe de commande en translation 24 (ou 34) ; plus précisément cet organe extrême borgne 23 (ou 24) est, dans l'exemple considéré, fixé à la tige 24A (34A) d'un vérin dont le cylindre 24B (34B) est fixé au troisième côté 13 ou au quatrième côté 14.

Les tronçons tubulaires modulaires ou extrêmes 21, 22, 23 (ou 31, 32, ou 33) sont attelés entre eux par des moyens d'accrochage 40 admettant une position de libération, grâce à quoi l'attelage entre les tronçons modulaires ou extrêmes d'une ligne peut être supprimé temporairement entre deux quelconques de ces tronçons.

Plus précisément (voir la figure 5) les moyens d'accrochage, à l'interface entre deux tronçons quelconques 21 et 21′, comportent un crochet pivotant 41, porté par l'un des tronçons, et un rebord 42 ménagé sur l'autre des tronçons et adapté à être coiffé par ce crochet et retenu axialement par le bec 43 de celui-ci. Ce crochet est maintenu en position de verrouillage par un organe de rappel élastique 44 ; il est monté dans une chape 45 dont une partie seulement est représentée à la figure 5 pour bien faire apparaître le montage du crochet.

Ce crochet 41 est solidaire d'un levier de manoeuvre 46 destiné à permettre, par simple appui sur celui-ci, d'amener ce crochet dans sa position de libération.

Des éléments d'étanchéité sont prévus à chaque interface entre tronçons adjacents. De préférence chaque tronçon modulaire 21 ou 31 comporte un embout mâle 21A (ou 31A) et un embout femelle 21B (ou 31B), et chaque tronçon extrême comporte un embout mâle ou femelle, complémentaire de l'embout qui lui fait face. Des joints d'étanchéité 51 et 52 sont avantageusement prévus aussi bien sur les embouts mâles que femelles, garantissant une très bonne étanchéité malgré le grand nombre d'interfaces entre tronçons.

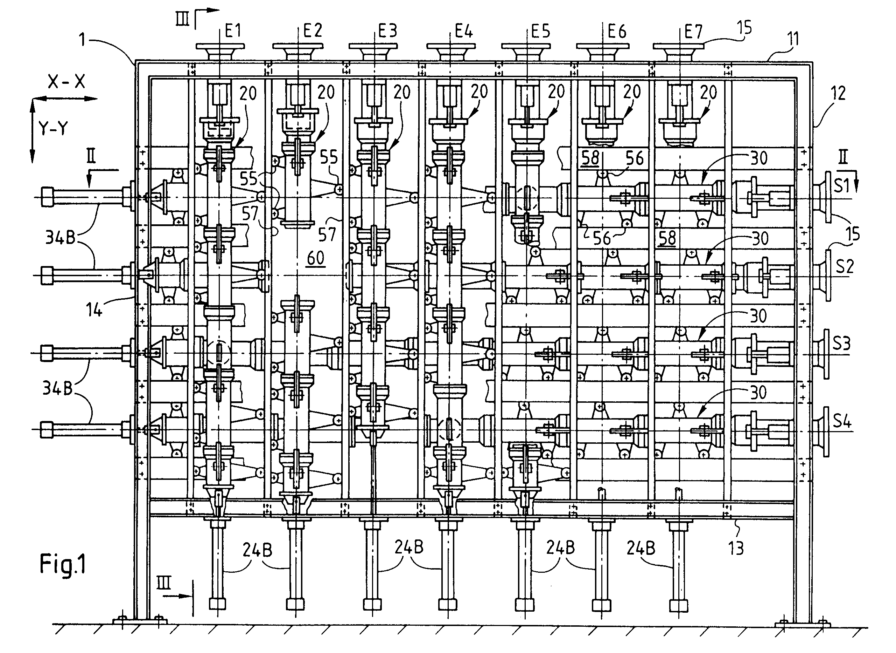

Les tronçons modulaires 21 (ou 31) et le tronçon extrême borgne 23 (ou 33) de chaque ligne sont individuellement montés coulissants, ici au moyen de trois galets 55 (ou 56), sur des rails de guidage 57 (ou 58) parallèles à chaque ligne. De la sorte, lorsque l'attelage entre deux quelconques des tronçons d'une ligne est supprimé temporairement, la commande en translation du tronçon extrême borgne 23 (ou 33) de la ligne par l'élément 24 (ou 34) associé vers le troisième (ou quatrième) côté dégage un espace 60 dans la ligne (voir la figure 1).

Le raccordement entre deux lignes des deux séries se fait à l'aide d'un élément libre 70, ayant la forme d'un "H" tordu. Plus précisément, cet élément 70 comporte un tronçon central 71, en pratique au moins approximativement parallèle à Z-Z, et deux tronçons transversaux 72 et 73, décalés le long du tronçon central d'une distance égale à l'écartement L entre les plans P1 et P2, et destinés à s'aligner respectivement suivant X-X et Y-Y.

A l'intérieur de cet élément 70 sont ménagés deux coudes tubulaires 74 et 75 de même diamètre interne que les lignes, raccordés l'un à l'autre dans le tronçon central 71, et destinés à être raccordés simultanément auxdites deux lignes, en direction des tronçons extrêmes fixes 22 (ou 32) des lignes. Cet élément 70 est de même muni, aux extrémités de son double coude, d'embouts mâle et femelle.

Aucun organe d'accrochage mécanique n'est nécessaire pour le positionnement et l'étanchéité des lignes au niveau de l'élément 70 en double coude : il suffit de commander en extension les vérins 24 et 34.

De manière avantageuse un manipulateur 80 est prévu pour la manipulation de l'élément de raccordement selon les trois directions, de préférence sans changement d'orientation. Ce manipulateur 80 comporte une poutre 81 parallèle à Y-Y, mobile par rapport au cadre parallèlement à X-X, un chariot 82 mobile le long de cette poutre et portant un bras télescopique 83 parallèle à Z-Z terminé par une pince de préhension 84 adaptée à saisir une patte de préhension 77 prévue sur l'élément de raccordement.

Plus précisément ce manipulateur est composé d'un rail 85 d'un rail fixé au sol sur lequel la poutre ou châssis mobile 81 munie de galets 86 se déplace horizontalement grâce à l'action d'un moteur 87 (électrique, hydraulique ou pneumatique) dont un pignon denté engrène sur une crémaillère solidaire du rail-support.

Au sein du châssis mobile, deux rails-guides verticaux supportent le chariot 82 muni également de galets 88 et d'un moteur 89 permettant un déplacement dans le plan vertical.

Sur le chariot 82 à déplacement vertical, un vérin 83A (pneumatique, hydraulique, électrique) commande le déplacement horizontal du bras 83 et donc de la pince de préhension 84, par exemple à commande pneumatique, qui permet de saisir et de déplacer le double coude 70.

On appréciera que le manipulateur 80 est de préférence situé en regard des lignes verticales, c'est-à-dire de la série qui comporte le plus grand nombre de lignes.

De même on notera que les moyens d'accrochage 40 des diverses lignes sont disposés en regard du manipulateur, grâce à quoi le manipulateur 80 peut, pour commander la formation d'un espace 60 après avoir saisi l'élément de raccordement 70, se contenter de faire appuyer par cet élément sur le levier de manoeuvre 46. De manière préférée, l'élément de raccordement 70 est muni d'une portée d'appui 76 destinée à exercer cet appui (il s'agit par exemple d'un disque, adapté à provoquer successivement l'apparition d'un espace tel que 60 dans une ligne de chaque série).

De manière avantageuse, l'installation comporte quatre éléments de raccordement, c'est-à-dire autant d'éléments de raccordement qu'il y a de lignes dans la série la moins nombreuse (ici la série des sorties de fluide).

Ces éléments de raccordement admettent par exemple des emplacements ou niches de stockage 90 (voir notamment l'élément 70'' de la figure 2) situées au moins approximativement en regard, selon Z-Z, des tronçons extrêmes fixes 32 de la série la moins nombreuse, dans le plan P1 de la série la plus nombreuse (donc globalement dans l'encombrement du cadre 1). Ces niches sont par exemple de simples barres d'appui sur lesquelles les éléments reposent par gravité.

Pour faciliter la mise en place des éléments de raccordement dans les espaces 60, sans nécessiter de déplacements selon X-X ou Y-Y autres que pour amener ces éléments depuis leurs emplacements de stockage, les tronçons extrêmes "fixes" 22 ou 32 ont, en direction de l'intérieur du cadre, un embout rétractable 22A (ou 32A) commandé par des vérins 92. Un tel embout n'a qu'une course très inférieure à la longueur d'un tronçon modulaire 21 (ou 31), à peine supérieure à la profondeur de pénétration de l'élément mâle dans l'élément femelle. Cette course vaut par exemple entre 10 % et 15 % de la longueur des tronçons modulaires.

Les tronçons modulaires 21 et 31 ont de préférence la même longueur dans les deux séries de lignes.

L'écartement entre les plans P1 et P2 des séries de lignes vaut de préférence entre 3 et 4 fois le diamètre des lignes.

Les vérins de commande en translation 24 ou 34 ont trois configuration principales :
- vérin tige rentrée = position de désengagement du double coude 70,
- vérin tige sortie = position de fermeture de ligne (sans le double coude), cette position permet également de rendre à nouveau solidaires entre eux tous les tronçons afin de pouvoir effectuer une nouvelle ouverture dans l'attelage pour un nouveau point de connexion,
- vérin en position intermédiaire, mais sous pression = permet le serrage du double coude de connexion et assure l'étanchéité de l'ensemble.

De même, à l'extrémité opposée des lignes, les vérins hydrauliques 92 permettent la rétraction de l'attelage des tronçons au moment de l'ouverture de ligne. Ces mêmes vérins, en position tige sortie, permettent le serrage de l'ensemble des embouts soit lorsque le double coude de liaison 70 est inséré, soit lorsque la ligne n'est pas en service (position de fermeture).

Les organes de contrôle et de commande des divers mouvements du manipulateur sont reliés à un automate programmable 100 qui assure la gestion des diverses fonctions du manipulateur.

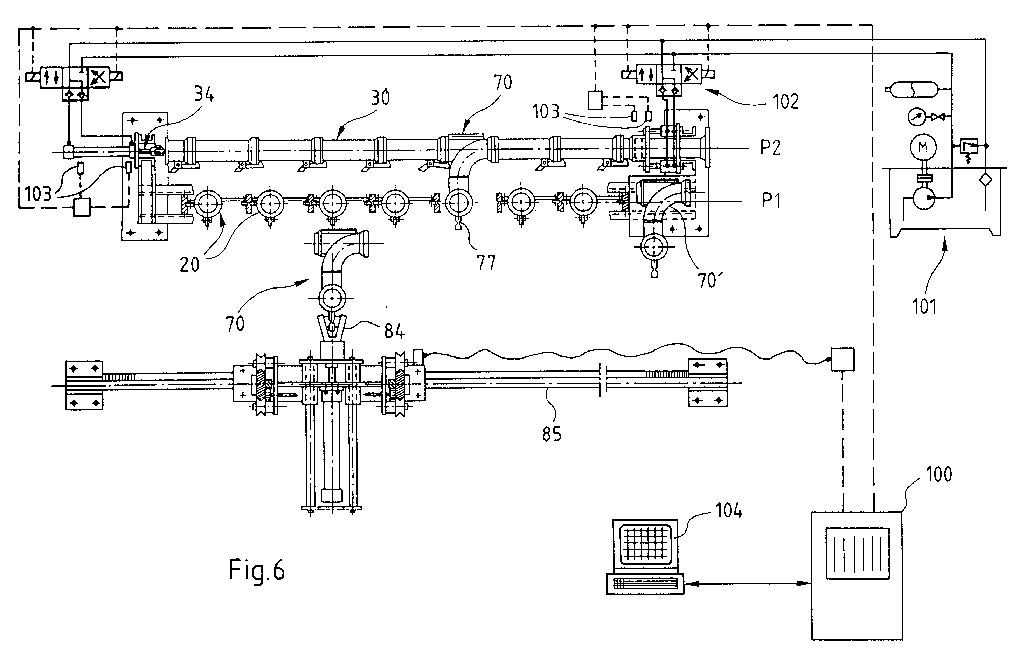

Tous les divers capteurs nécessaires au contrôle automatique de l'ensemble ne sont pas détaillés. Seuls les éléments principaux sont représentés sur le schéma de principe donné du système de commande à la figure 6 (le détail de ce système de commande étant du domaine normal de compétence de l'homme de métier, compte tenu des informations données ici) :
- une centrale hydraulique 101,
- une électrovanne 102 à trois positions pour la commande de chaque vérin de verrouillage des éléments tubulaires,
- des détecteurs de position 103 pour les vérins,
- l'automate programmable proprement dit, 100, pour le contrôle du manipulateur et des vérins de verrouillage des éléments tubulaires,
- un cadran clavier 104 permettant à l'opérateur de contrôler l'état des connexions.

Ce dispositif peut également être intégré dans un ensemble de contrôle général de l'unité de production.

On va maintenant décrire un exemple de séquence de connexion.

Le double coude 70 de la ligne 30 choisie se trouve dans la niche de stockage 90 à l'extrémité d'une ligne horizontale (double coude non engagé dans les lignes). On rappelle qu'une position de stockage est de préférence prévue pour chaque ligne horizontale.

L'opérateur désigne sur son clavier les lignes choisies en horizontal et vertical ; une fois le choix validé et l'ordre d'action donné, le manipulateur prend le double coude 70 (mouvements - horizontal - vertical - avancée de la pince - serrage) et provoque les étapes suivantes :
- déplacement du double coude en X-X et Y-Y face à l'emplacement désigné,
- avance horizontale (direction Z-Z) de la pince 84 jusqu'au déverrouillage du dispositif mécanique 40 maintenant les tronçons solidaires dans le plan vertical,
- retrait des tronçons par action des vérins 24 et 92 et, par conséquent, ouverture d'un espace libre 60 dans les lignes verticales,
- nouvelle avancée horizontale, jusqu'au déverrouillage du dispositif mécanique de verrouillage 40 des tronçons horizontaux,
- retrait des tronçons horizontaux par les vérins de serrage 34, 92 situés aux deux extrémités des lignes,
- ouverture d'un espace libre 60 dans le plan horizontal,
- avancée horizontale de la pièce 70 jusqu'en butée (position de connexion),
- serrage des éléments tubulaires en deux temps :
   . les deux vérins 92 situés côté raccordement (côtés 11 et 12) des lignes sont activés jusqu'en fin de course,
   . les vérins opposés 24 ou 34 sont activés et provoquent le serrage des joints d'étanchéité.

Ces vérins sont maintenus en pression permanente par un accumulateur hydraulique et d'autre part des clapets pilotés évitent toute ouverture intempestive des tubulures en service (sous pression) en cas de rupture des lignes hydrauliques d'alimentation des électrovannes.

L'opération de déconnexion se fait dans l'ordre inverse de la séquence décrite ci-dessus.

A titre d'exemple, les principales dimensions de l'installation sont les suivantes :
- diamètre intérieur des lignes : 10 cm environ (4 pouces),
- longueur du cadre : environ 3,10 m
- hauteur de portique : environ 2,60 m
- écartement entre lignes et longueur des tronçons : 35 cm
- écartement entre les plans P1 et P2 : 30 cm

Il va de soi que la description qui précède n'a été proposée qu'à titre d'exemple non limitatif et que de nombreuses variantes peuvent être proposées par l'homme de l'art sans sortir du cadre de l'invention.

C'est ainsi notamment que les vérins considérés ci-dessus sont des vérins hydrauliques, mais peuvent être par exemple des vérins à vis, à commande électrique, hydraulique ou pneumatique.

D'autre part, l'installation représentée comporte un manipulateur, mais celui-ci n'est pas un impératif, notamment pour les faibles nombre de lignes d'entrées/sorties (comme ici) et/ou pour les petits diamètres de lignes (25 mm, 51 mm ou 76 mm, c'est-à-dire 1, 2 ou 3 pouces voire 100 et 150 mm c'est-à-dire 4 et 6 pouces), auquel cas la masse des doubles coudes en permet une manoeuvre manuelle, par un opérateur assurant de façon également manuelle le déverrouillage aux bons endroits des lignes horizontales et verticales. Pour faciliter la mise en place des éléments de raccordement, des guides sont alors avantageusement prévus sur les éléments de raccordement et transversalement sur les rails-guides des tronçons de lignes, mais selon la direction Z-Z.

## Revendications

1. Installation de connexion sélective temporaire à entrées et sorties de fluides multiples, comportant :
. un cadre (1) ayant globalement la forme d'un parallélogramme et comportant de premier (11) et troisième (13) côtés parallèles à une première direction (X-X) et de second (12) et quatrième (14) côtés parallèles à une seconde direction (Y-Y),
. une première série de n lignes tubulaires (20) parallèles équidistantes coplanaires s'étendant entre les premier et troisième côtés (11, 13) parallèlement à la seconde direction (Y-Y) et une seconde série de m lignes tubulaires (30) parallèles équidistantes coplanaires s'étendant entre les second et quatrième côtés (12, 14) parallèlement à la première direction (X-X), ces première et seconde séries de lignes tubulaires (20, 30), étant de même diamètre intérieur et situés dans des plans parallèles (P1, P2) décalés d'une distance donnée (L) parallèlement à une troisième direction (Z-Z) transversale aux première et seconde directions,
. chaque ligne tubulaire (20, 30) comportant un attelage de tronçons tubulaires modulaires identiques (21, 31), en nombre au moins égal à (m - 1) pour les lignes de la première série et en nombre au moins égal à (n - 1) pour les lignes de la seconde série, et chaque tronçon modulaire (21, 31) d'une ligne d'une série étant en regard, selon la troisième direction (Z-Z), d'une ligne (30, 20) de l'autre série, cet attelage étant raccordé en une extrémité, à un tronçon extrême tubulaire fixe (22, 32) destiné à être raccordé à une entrée ou une sortie de fluide, et, en l'autre extrémité, à un tronçon extrême borgne (23, 33) lui-même fixé à un organe de commande en translation (24, 35), les tronçons tubulaires extrêmes fixes des lignes des première et seconde séries étant respectivement fixés aux premier et second côtés (11, 12), et les organes de commande en translation (24, 34) des lignes des première et seconde séries étant respectivement fixés aux troisième et quatrième côtés (13, 14) les tronçons tubulaires modulaires étant attelés entre eux et aux tronçons extrêmes par des moyens d'accrochage (40) admettant une position de libération, grâce à quoi l'attelage entre les tronçons modulaires ou extrêmes d'une ligne peut être supprimé temporairement entre deux quelconques de ces tronçons,
. les tronçons modulaires (21, 31) des lignes de chaque série ayant une longueur égale à l'écartement entre les lignes de l'autre série,
. des éléments d'étanchéité (51, 52) étant prévus à chaque interface entre tronçons modulaires ou extrêmes,
. les tronçons modulaires et le tronçon extrême borgne (23, 33) de chaque ligne étant individuellement montés coulissants sur des rails de guidage (57, 58) parallèles à cette ligne, grâce à quoi, lorsque l'attelage entre deux quelconques des tronçons d'une ligne est supprimé temporairement, la commande en translation du tronçon extrême borgne de la ligne par son organe de commande en translation, à l'opposé du tronçon extrême fixe de cette ligne, dégage un espace (60) dans la ligne entre lesdits tronçons quelconques,
. un élément libre de raccordement (70) étant adapté à venir occuper deux tels espaces (60) ménagés, en regard suivant la troisième direction (Z-Z), dans deux lignes tubulaires appartenant respectivement à chacune des séries, cet élément comportant un tronçon central (71) destiné à s'aligner au moins approximativement selon la troisième direction (Z-Z) et deux tronçons (72, 73) transversaux (72-73) décalés le long de ce tronçon central d'une distance égale à l'écartement entre les séries de lignes, et destinés à s'aligner respectivement suivant les première (X-X) et seconde (Y-Y) directions, à l'intérieur de cet élément étant ménagés deux coudes tubulaires (74, 75) de même diamètre interne que les lignes, raccordés l'un à l'autre dans le tronçon central, et destinés à être raccordés simultanément auxdites deux lignes, en direction des tronçons extrêmes fixes de ces lignes, ces tronçons transversaux étant rendus solidaires temporairement de ces lignes par commande en translation des tronçons extrêmes borgnes de ces lignes vers les tronçons extrêmes fixes de ces lignes.

2. Installation selon la revendication 1, caractérisée en ce qu'elle comporte un manipulateur (80) muni d'une pince de préhension (84) mobile parallèlement aux trois directions, destiné à la commande en mouvement de l'élément de raccordement (70), et adapté à déplacer cet élément de raccordement sans changement d'orientation.

3. Installation selon la revendication 2, caractérisée en ce que ce manipulateur (80) comporte une poutre (81) parallèle aux lignes d'une série, mobile par rapport au cadre parallèlement aux lignes de l'autre série, un chariot (82) mobile le long de cette poutre et portant un bras télescopique (83) parallèle à la troisième direction, terminé par la pince de préhension (84).

4. Installation selon la revendication 2 ou la revendication 3, caractérisée en ce que, les nombres entiers n et m étant différents, le manipulateur (80) est situé en regard de la série comportant le plus grand nombre de lignes.

5. Installation selon l'une quelconque des revendications 1 à 4, caractérisée en ce que, à l'interface entre deux tronçons quelconques, les moyens d'accrochage (40) sont formés d'un crochet pivotant (41) porté par l'un des tronçons, adapté à coiffer un rebord (42) ménagé sur l'autre des tronçons, et muni d'un levier de manoeuvre (46) destiné à permettre, par appui de l'élément de manoeuvre sur ce levier, à amener ce crochet (41) en position de libération, à l'encontre d'un organe de rappel élastique (44).

6. Installation selon la revendication 5, caractérisé en ce que l'élément de raccordement (70) comporte une portée d'appui (76) destinée à agir sur ce levier de manoeuvre (46).

7. Installation selon l'une quelconque des revendications 1 à 6, caractérisée en ce qu'elle comporte une pluralité d'éléments de raccordement (70), de nombre égal au plus petit des nombres entiers n et m.

8. Installation selon la revendication 7, caractérisée en ce qu'elle comporte, pour ces éléments de raccordement, des emplacements de stockage (90) situés au moins approximativement en regard, selon la troisième direction, des tronçons extrêmes fixes (32) de la série ayant un nombre de lignes égal à ce nombre d'éléments de raccordement, dans le plan de l'autre série de lignes.

9. Installation selon l'une quelconque des revendications 1 à 8, caractérisée en ce que les tronçons extrêmes fixes ont, en direction des lignes, un embout rétractable sur une course très inférieure à la longueur d'un tronçon modulaire, destiné à permettre par rétraction l'apparition d'un jeu pour la mise en place, parallèlement à la troisième direction, de l'élément de raccordement dans les espaces ménagés en regard dans les deux séries de lignes, et à participer par suppression de cette rétraction, au maintien en place de cet élément dans l'installation.

10. Installation selon la revendication 9, caractérisée en ce que la course de rétraction vaut entre 10 et 15 % de la longueur des tronçons modulaires.

11. Installation selon l'une quelconque des revendications 1 à 10, caractérisée en ce que chaque tronçon modulaire comporte un embout mâle (21A, 31A) et un embout femelle (21B, 31B) tous deux munis de joints d'étanchéité (51, 52).

12. Installation selon l'une quelconque des revendications 1 à 11, caractérisée en ce que l'écartement entre les plans des séries de lignes vaut au moins trois fois le diamètre interne des lignes.

13. Installation selon l'une quelconque des revendications 1 à 12, caractérisée en ce que les première, seconde et troisième directions sont perpendiculaires entre elles.

14. Installation selon l'une quelconque des revendications 1 à 13, caractérisée en ce que les séries de lignes sont dans des plans verticaux.

15. Installation selon l'une quelconque des revendications 1 à 14, caractérisée en ce que l'organe de commande en translation est un vérin (24).

16. Installation selon l'une quelconque des revendications 1 à 15, caractérisée en ce que les nombres entiers n et m sont compris entre 5 et 30.

## Claims

1. Temporary selective connection installation with multiple fluid inlets and outlets, comprising:
. a generally parallelogram-shape frame (1) comprising first (11) and third (13) sides parallel to a first direction (X-X) and second (12) and fourth (14) sides parallel to a second direction (Y-Y),
. a first series of n coplanar equidistant parallel tubular lines (20) extending between the first and third sides (11, 13) parallel to the second direction (Y-Y) and a second series of m coplanar equidistant parallel tubular lines (30) extending between the second and fourth sides (12, 14) parallel to the first direction (X-X), said first and second series of tubular lines (20, 30) having the same inside diameter and being situated in parallel planes (P1, P2) offset by a given distance (L) parallel to a third direction (Z-Z) transverse to the first and second directions,
. each tubular line (20, 30) comprising a string of identical modular tubular sections (21, 31) of which there are at least (m - 1) for the lines of the first series and at least (n - 1) for the lines of the second series, and each modular section (21, 31) of one line of one series facing, in the third direction (Z-Z), a line (30, 20) of the other series, said string being connected at one end to a fixed tubular end section (22, 32) adapted to be connected to a fluid inlet or outlet and at the other end to a blind end section (23, 33) fixed to a translation control unit (24, 35), the fixed end tubular sections of the lines of the first and second series being respectively fixed to the first and second sides (11, 12) and the translation control units (24, 34) of the lines of the first and second series being respectively fixed to the third and fourth sides (13, 14), the modular tubular sections being coupled together and to the end sections by coupling means (40) having a release position whereby the coupling between the modular or end sections of one line may be eliminated temporarily between any two sections,
. the modular sections (21, 31) of the lines of each series having a length equal to the distance between the lines of the other series,
. sealing members (51, 52) being provided at each interface between modular or end sections,
. the modular sections and the blind end section (23, 33) of each line being individually slidably mounted on guide rails (57, 58) parallel to said line whereby, when the coupling between any two sections of a line is temporarily eliminated, movement in translation of the blind end section of the line by its translation control unit away from the fixed end section of said line produces a gap (60) in the line between said any sections,
. a free connecting member (70) being adapted to occupy two such gaps (60) facing each other in the third direction (Z-Z) in two tubular lines each belonging to a respective one of the series, this member comprising a central section (71) adapted to be aligned at least approximately with the third direction (Z-Z) and two transverse sections (72, 73) offset lengthwise of said central section by a distance equal to the distance between the two series of lines and adapted to be aligned with the first (X-X) and second (Y-Y) directions, respectively, two tubular elbow bends (74, 75) of the same inside diameter as the lines being formed inside said member, connected to each other in the central section and adapted to be connected simultaneously to said two lines towards the fixed end sections of said lines, said transverse sections being temporarily fastened to said lines by movement in translation of the blind end sections of said lines towards the fixed end sections of said lines.

2. Installation according to claim 1 characterised in that it comprises a manipulator (80) provided with a handling clamp (84) movable parallel to the three directions adapted to control movement of the connecting member (70) and to displace said connecting member without changing its orientation.

3. Installation according to claim 2 characterised in that said manipulator (80) comprises a beam (81) parallel to the lines of one series, mobile relative to the frame parallel to the lines of the other series and a carriage (82) mobile along said beam and carrying a telescopic arm (83) parallel to the third direction ending at the handling clamp (84).

4. Installation according to claim 2 or claim 3 characterised in that, the integer numbers n and m being different, the manipulator (80) faces the series comprising the greater number of lines.

5. Installation according to any one of claims 1 to 4 characterised in that the coupling means (40) at the interface between any two sections are in the form of a pivoting hook (41) carried by one section adapted to fit over a rim (42) provided on the other section and provided with an operating lever (46) adapted, by virtue of bearing engagement of the operating member on said lever, to displace said hook (41) to a release position against the action of a spring return member (44).

6. Installation according to claim 5 characterised in that the connecting member (70) comprises a bearing surface (76) adapted to act on said operating lever (46).

7. Installation according to any one of claims 1 to 6 characterised in that it comprises a plurality of connecting members (70) the number of which is equal to the smaller of the integer numbers n and m.

8. Installation according to claim 7 characterised in that it comprises storage locations (90) for said connecting members at least approximately facing in said third direction the fixed end sections (32) of the series having a number of lines equal to the number of connecting members, in the plane of the other series of lines.

9. Installation according to any one of claims 1 to 8 characterised in that the fixed end sections have, towards the lines, an end-piece that is retractable over a travel very much less than the length of a modular section and adapted to retract to provide clearance for the placing parallel to the third direction of the connecting member into the facing gaps in the two series of lines and to contribute through eliminating said retraction to retaining said member in place in the installation.

10. Installation according to claim 9 characterised in that the retraction travel is between 10% and 15% of the length of the modular sections.

11. Installation according to any one of claims 1 to 10 characterised in that each modular section comprises a male end-piece (21A, 31A) and a female end-piece (21B, 31B) both provided with seals (51, 52).

12. Installation according to any one of claims 1 to 11 characterised in that the distance between the planes of the series of lines is at least three times the inside diameter of the lines.

13. Installation according to any one of claims 1 to 12 characterised in that the first, second and third directions are mutually perpendicular.

14. Installation according to any one of claims 1 to 13 characterised in that the series of lines are in vertical planes.

15. Installation according to any one of claims 1 to 14 characterised in that the translation control unit is a piston-and-cylinder actuator (24).

16. Installation according to any one of claims 1 to 15 characterised in that the integer numbers n and m are between 5 and 30.

## Patentansprüche

1. Anlage zur selektiven zeitweiligen Verbindung mit Eingängen und Ausgängen von multiplen Fluiden, aufweisend:
- einen Rahmen (1), der global die Form eines Parallelogramms hat und eine erste (11) und eine dritte Seite (13), die zu einer ersten Richtung (X-X) parallel sind, und eine zweite (12) und eine vierte Seite (14) aufweist, die zu einer zweiten Richtung (Y-Y) parallel sind,
- eine erste Reihe von n koplanaren, in gleichen Abständen angeordneten, parallelen Rohrleitungen (20), die sich zwischen der ersten und der dritten Seite (11, 13) parallel zur zweiten Richtung (Y-Y) erstrecken, und eine zweite Reihe von m koplanaren, in gleichen Abständen angeordneten, parallelen Rohrleitungen (30), die sich zwischen der zweiten und der vierten Seite (12, 14) parallel zur ersten Richtung (X-X) erstrecken, wobei diese erste Reihe und diese zweite Reihe von Rohrleitungen (20, 30) von demselben Innendurchmesser sind und in parallelen Ebenen (P1, P2) gelegen sind, die um einen gegebenen Abstand (L) parallel zu einer dritten Richtung (Z-Z) quer zur ersten und zur zweiten Richtung versetzt sind,
- wobei jede Rohrleitung (20, 30) eine Kupplung von identischen Modulrohrabschnitten (21, 31) in einer Anzahl von mindestens gleich (m - 1) bei den Leitungen der ersten Reihe und in einer Anzahl von mindestens gleich (n - 1) bei den Leitungen der zweiten Reihe aufweist und jeder Modulabschnitt (21, 31) einer Leitung einer Reihe gemäß der dritten Richtung (Z-Z) einer Leitung (30, 20) der anderen Reihe gegenübersteht, wobei diese Kupplung an einem Ende an einen feststehenden Rohrendabschnitt (22, 32), der dazu bestimmt ist, an einen Fluideingang oder -ausgang angeschlossen zu werden, und am anderen Ende an einen Sackendabschnitt (23, 33) angeschlossen ist, der seinerseits an einem Translationsbetätigungsorgan (24, 35) befestigt ist, wobei die feststehenden Rohrendabschnitte der Leitungen der ersten und der zweiten Reihe an der ersten bzw. zweiten Seite (11, 12) befestigt sind und die Translationsbetätigungsorgane (24, 34) der Leitungen der ersten und der zweiten Reihe an der dritten bzw. vierten Seite (13, 14) befestigt sind, wobei die Modulrohrabschnitte miteinander und mit den Endabschnitten durch Einhakmittel (40) gekuppelt sind, die eine Freigabestellung zulassen, dank der die Kupplung zwischen den Modul- oder Endabschnitten einer Leitung zwischen zwei beliebigen dieser Abschnitte zeitweise aufgehoben werden kann,
- wobei die Modulabschnitte (21, 31) der Leitungen jeder Reihe eine Länge haben, die gleich dem Abstand zwischen den Leitungen der anderen Reihe ist,
- wobei Dichtungselemente (51, 52) an jeder Schnittstelle zwischen Modul- oder Endabschnitten vorgesehen sind,
- wobei die Modulabschnitte und der Sackendabschnitt (23, 33) jeder Leitung auf zu dieser Leitung parallelen Führungsschienen (57, 58) einzeln verschiebbar angeordnet sind, wodurch, wenn die Kupplung zwischen zwei beliebigen der Abschnitte einer Leitung zeitweise aufgehoben ist, die Translationsbetätigung des Sackendabschnitts der Leitung durch sein Translationsbetätigungsorgan auf der dem feststehenden Endabschnitt dieser Leitung entgegengesetzten Seite in der Leitung zwischen diesen beliebigen Abschnitten einen Raum (60) freigibt,
- wobei ein freies Anschlußelement (70) so ausgelegt ist, daß es zwei solche Räume (60) einnehmen kann, die gemäß der dritten Richtung (Z-Z) in zwei jeweils zu jeder der Reihen gehörenden Rohrleitungen einander gegenüberstehen, wobei dieses Element einen zentralen Abschnitt (71), der dazu bestimmt ist, sich mindestens annähernd gemäß der dritten Richtung (Z-Z) auszurichten, und zwei Querabschnitte (72, 73) aufweist, die längs dieses zentralen Abschnitts um einen Abstand versetzt sind, der gleich dem Abstand zwischen den Reihen von Leitungen ist, und die dazu bestimmt sind, sich gemäß der ersten (X-X) bzw. der zweiten (Y-Y) Richtung auszurichten, wobei im Inneren dieses Elements zwei Rohrknie (74, 75) von demselben Innendurchmesser wie die Leitungen angeordnet sind, die im zentralen Abschnitt aneinander angeschlossen sind und die dazu bestimmt sind, gleichzeitig an diese beiden Leitungen in Richtung der feststehenden Endabschnitte dieser Leitungen angeschlossen zu werden, wobei diese Querabschnitte durch Translationsbetätigung der Sackendabschnitte dieser Leitungen auf die feststehenden Endabschnitte dieser Leitungen zu mit diesen Leitungen zeitweise fest verbunden werden.

2. Anlage nach Anspruch 1, dadurch gekennzeichnet, daß sie einen Manipulator (80) aufweist, der mit einer zu den drei Richtungen parallel beweglichen Greifzange (84) versehen ist, zur Bewegungsbetätigung des Anschlußelements (70) bestimmt ist und so ausgelegt ist, daß er dieses Anschlußelement ohne Richtungsänderung bewegen kann.

3. Anlage nach Anspruch 2, dadurch gekennzeichnet, daß dieser Manipulator (80) einen zu den Leitungen einer Reihe parallelen Träger (81), der bezüglich des Rahmens parallel zu den Leitungen der anderen Reihe beweglich ist, und einen Wagen (82) aufweist, der längs dieses Trägers beweglich ist und einen zu der dritten Richtung parallelen Teleskoparm (83) trägt, der durch die Greifzange (84) beendet wird.

4. Anlage nach Anspruch 2 oder Anspruch 3, dadurch gekennzeichnet, daß der Manipulator (80), wenn die ganzen Zahlen n und m verschieden sind, gegenüber der Reihe gelegen ist, die die größere Anzahl von Leitungen aufweist.

5. Anlage nach einem der Ansprüche 1 bis 4, dadurch gekennzeichnet, daß die Einhakmittel (40) an der Schnittstelle zwischen zwei beliebigen Abschnitten von einem von einem der Abschnitte getragenen verschwenkbaren Haken (41) gebildet werden, der so ausgelegt ist, daß er über einen am anderen der Abschnitte angeordneten, vorstehenden Rand (42) greift, und mit einem Betätigungshebel (46) versehen ist, der dazu bestimmt ist, durch Auflage des Betätigungselements auf diesem Hebel diesen Haken (41) entgegen einem elastischen Rückholorgan (44) in die Freigabestellung zu bringen.

6. Anlage nach Anspruch 5, dadurch gekennzeichnet, daß das Anschlußelement (70) eine Auflagefläche (76) aufweist, die dazu bestimmt ist, auf diesen Betätigungshebel (46) einzuwirken.

7. Anlage nach einem der Ansprüche 1 bis 6, dadurch gekennzeichnet, daß sie eine Vielzahl von Anschlußelementen (70) in einer Anzahl aufweist, die gleich oder kleiner als die ganzen Zahlen n und m ist.

8. Anlage nach Anspruch 7, dadurch gekennzeichnet, daß sie für diese Anschlußelemente Speicherplätze (90) aufweist, die gemäß der dritten Richtung mindestens annähernd gegenüber den feststehenden Endabschnitten (32) der Reihe, die eine Anzahl von Leitungen gleich dieser Anzahl von Anschlußelementen hat, in der Ebene der anderen Reihe von Leitungen gelegen sind.

9. Anlage nach einem der Ansprüche 1 bis 8, dadurch gekennzeichnet, daß die feststehenden Endabschnitte in Richtung der Leitungen einen Ansatz haben, der auf einem Weg, der sehr viel kleiner als die Länge eines Modulabschnitts ist, zurückziehbar ist und der dazu bestimmt ist, durch Zurückziehen das Auftreten eines Spiels für die Einführung des Anschlußelements parallel zu der dritten Richtung in die gegenüber in den beiden Reihen von Leitungen angeordneten Räume zu gestatten und durch Aufhebung dieses Zurückziehens am Halt dieses Elements am Platz in der Anlage teilzunehmen.

10. Anlage nach Anspruch 9, dadurch gekennzeichnet, daß der Zurückziehungsweg zwischen 10 und 15 % der Länge der Modulabschnitte beträgt.

11. Anlage nach einem der Ansprüche 1 bis 10, dadurch gekennzeichnet, daß jeder Modulabschnitt einen einführbaren Ansatz (21A, 31A) und einen aufnehmenden Ansatz (21B, 31B) aufweist, die beide mit Dichtungen (51, 52) versehen sind.

12. Anlage nach einem der Ansprüche 1 bis 11, dadurch gekennzeichnet, daß der Abstand zwischen den Ebenen der Reihen von Leitungen mindestens das Dreifache des Innendurchmessers der Leitungen beträgt.

13. Anlage nach einem der Ansprüche 1 bis 12, dadurch gekennzeichnet, daß die erste, die zweite und die dritte Richtung zueinander senkrecht sind.

14. Anlage nach einem der Ansprüche 1 bis 13, dadurch gekennzeichnet, daß die Reihen von Leitungen in vertikalen Ebenen sind.

15. Anlage nach einem der Ansprüche 1 bis 14, dadurch gekennzeichnet, daß das Translationsbetätigungsorgan ein Zylinder (24) ist.

16. Anlage nach einem der Ansprüche 1 bis 15, dadurch gekennzeichnet, daß die ganzen Zahlen n und m zwischen 5 und 30 betragen.
